# EUROPÄISCHE PATENTSCHRIFT

(11) **EP 1 979 656 B1**
(45) Veröffentlichungstag und Bekanntmachung des Hinweises auf die Patenterteilung: **28.10.2009**
(21) Anmeldenummer: 07711123.5
(22) Anmeldetag: 11.01.2007
(51) Int. Cl.: F16J 15/32, F16J 15/56

(54) **LÖSBARE SCHUTZLIPPE AN ABSTREIFELEMENT**
REMOVABLE PROTECTIVE LIP ON A WIPING ELEMENT
LÈVRE DE PROTECTION AMOVIBLE MONTÉE SUR UN ÉLÉMENT RACLEUR

(30) Priorität: 18.01.2006 DE 102006002347
(43) Veröffentlichungstag der Anmeldung: 15.10.2008
(73) Patentinhaber: Trelleborg Sealing Solutions Germany GmbH, 70565 Stuttgart (DE)
(72) Erfinder: REINER, Sebastian, 84424 Isen-Burgrain (DE)
(74) Vertreter: Kohler Schmid Möbus
(86) Internationale Anmeldenummer: PCT/DE2007/000026
(87) Internationale Veröffentlichungsnummer: WO 2007/082502

(56) Entgegenhaltungen:
- DE-A1- 19 639 798
- DE-C1- 4 408 408
- DE-U1- 8 615 170
- FR-A- 2 466 685
- US-A1- 2005 067 242

## Beschreibung

Die Erfindung betrifft ein Abstreifelement aus einem gummi- oder zähelastischen Material zum Schutz gegeneinander beweglicher Bauteile, wobei an dem Abstreifelement zumindest eine Abstreiflippe vorgesehen ist, und wobei das Abstreifelement eine Schutztippe aufweist, die lösbar am Abstreifelement vorgesehen ist.

Bekannt geworden ist ein derartiges Abstreifelement beispielsweise aus der DE 86 15 170 U1. Zum Abdichten eines axial beweglichen Bauteils, wie einer Kolbenstange, liegt das Abstreifelement mit einer Dichtlippe und einer Abstreiflippe am Bauteil an. Durch die mediumseitige Dichtlippe wird der auf dem Bauteil befindliche Mediumsfilm bei der Axialbewegung des Bauteils abgestreift. Die luftseitige Abstreiflippe verhindert den Eintritt von Feststoffen, wie z.B. Schutz oder Spänen, zur Mediumsseite. Die zusätzlich vorgesehene Schutzlippe ist lösbar mit dem Abstreifelement zu einer einbaufertigen Einheit verbunden. Die Schutzlippe wird mit einem Halterand in eine an dem Abstreifelement ausgebildete Rastöffnung eingesetzt bzw. eingerastet und bei montiertem Abstreifelement auf diese Weise gehalten. Beim Einsatz des bekannten Abstreifelements liegt die Schutzlippe am Bauteil an, wodurch Verunreinigungen, insbesondere Eis, abgeschabt werden.

Die US 2005/0067242 A1 betrifft ein Dichtungssystem für einen Stoßdämpfer eines Kraftfahrzeuges. Um Hydraulikflüssigkeit im Stoßdämpfer zu halten und Schmutz sowie Fremdpartikel am Eintritt in den Stoßdämpfer zu hindern, sind ein Abstreifelement und ein Dichtungselement zwischen einer Führungsstange und einer Kolbenstange angeordnet. Das Abstreifelement liegt mit einer Abstreiflippe und einer Dichtlippe an der Kolbenstange an. An der der Abstreiflippe zugeordneten Seite des Abstreifelements ist zur Außenseite des Stoßdämpfers gerichtet eine Schutzlippe angeordnet. Die aus einem harten Kunststoff bestehende Schutzlippe greift einenends in eine Ringnut am Abstreifelement ein und legt anderenends zum Abstreifen von Schmutz, Wasser oder Fremdpartikeln an der Kolbenstange an.

Die DE 44 08 408 C1 offenbart ein Abstreifelement, welches einen Abstreifring mit einer Abstreiflippe und einen einstückig mit dem Abstreifring verbundenen Sicherungsring umfasst. Das Abstreifelement umschfießt eine Kolbenstange und verhindert durch Anlage der Abstreiflippe an der Kolbenstange den Eintritt von Verunreinigungen, indem am Außenumfang der Kolbenstange anhaftende Verschmutzungen abgestreift werden. Um stärker anhaftende Partikel von der Kolbenstange abzustreifen, kann dem Abstreifelement eine Schutzlippe aus einem härteren Kunststoffmaterial vorgeschaltet werden. Die Schutzlippe liegt in Gebrauchsstellung des Abstreifelements ebenfalls am Außenumfang der Kolbenstange an. Zur Befestigung der Schutzlippe sind Vorsprünge an einer Außenseite des Abstreifelements ausgebildet, welche als Durchbrechungen ausgebildete Ausnehmungen an der Schutzlippe durchgreifen. Die überstehenden Endabschnitte der Vorsprünge werden vorzugsweise unter Wärmezufuhr zu verbreiterten Köpfen verformt und befestigen vergleichbar einer Vernietung die Schutzlippe am Abstreifelement.

Abstreifelemente werden bei Systemen gegeneinander beweglicher Bauteile eingesetzt, um diese vor einem Eintritt von Fremdstoffen zu schützen. Das Abstreifelement ist in der Regel einer weiteren Dichtung vorgeschaltet. Die am Abstreifelement vorgesehene Abstreiflippe liegt an dem Bauteil an, das im ausgefahrenen Zustand den Umgebungsbedingungen ausgesetzt ist, und streift an dem Bauteil haftende Partikel von Schmutz, Eis; Wasser und anderen Fremdsubstanzen ab, bevor das Bauteil wieder in das System eingefahren wird. Bei einer Zylinder-Kolben-Einheit wird die einzufahrende Kolbenstange durch ein Abstreifelement frei von Fremdstoffen gehalten. Abstreifelemente sind beispielsweise in dem Fachbuch "Heinz Konrad Müller, Abdichtung bewegter Maschinenteile, Medienverlag, 1990" (Seite 192) beschrieben und als Teil einer Abstreiferanordnung aus DE 196 39 798 bekannt.

Die durch Abstreifelemente geschützten Systeme sind oftmals hydraulische. In ein hydraulisches System eingetretene Fremdpartikel können zu Schäden an Dichtungen, Führungen, Ventilen und Pumpen führen. Ebenso können die gegeneinander beweglichen Bauteile beschädigt werden. Die Fremdpartikel können beispielsweise unter eine nachgeschaltete Dichtung gelangen, die unter hohem Druck an einem Bauteil anlegt, und bei der Gegenbewegung der Bauteile zumindest eines der Bauteile beschädigen. Auf diese Weise entstehen in einer Zylinder-Kolben-Einheit beim Ein- und Ausfahren der Kolbenstange Riefen an der Kolbenstange. Die Riefen an der Kolbenstange wiederum können die Abstreiflippe eines vorgeschalteten Abstreifelements beschädigen und somit das Abstreifelement in seiner Funktion beeinträchtigen.

Im laufenden Betrieb eines hydraulischen Systems wird das Eindringen von Fremdstoffen durch entsprechende Abstreifelemente weitgehend verhindert. Beschädigungen und Verschmutzungen an außenliegenden Bereichen eingefahrener Bauteile können jedoch auch vor Inbetriebnahme, insbesondere beim Transport und bei der Montage, auftreten.

Systeme gegeneinander beweglicher Bauteile wie eine Zylinder-Kolben-Einheit werden in der Regel mit bereits montiertem Abstreifelement transportiert. Zum Schutz vor Korrosion wird der außenliegende Bereich eines eingefahrenen Bauteils, beispielsweise das Außenstück einer Kolbenstange, mit einem Wachs oder einem Fett benetzt.

Die Bauteile eins hydraulischen Systems werden in der Regel nach der Montage lackiert. Beim Lackiervorgang können Lackpartikel in Bereiche von Bauteilen gelangen, deren Flächen gegeneinander unter Hochdruck abzudichten sind. Durch im Laufe eines Lackierungsvorgangs auftretende Temperaturunterschiede kann ein Bauteil unterschiedlich weit gegen ein angrenzendes Bauteil verfahren sein, wodurch ein an das Abstreifelement angrenzender Driftbereich entsteht. Der Driftbereich des Bauteils und die an ihm haftenden Lackpartikel werden nach dem Lackierungsvorgang durch ein abkühlbedingtes Einfahren des Bauteils in das hydraulische System eingefahren. Die Lackpartikel haben analog zu sonstigen Fremdstoffen die eingangs beschriebenen schädlichen Wirkungen auf ein hydraulisches System. So kann ein hydraulisches System vor der Inbetriebnahme bereits mit Fremdpartikeln kontaminiert sein, wodurch die Funktionalität von Abstreif- und Dichtungselementen sowie des Gesamtsystems eingeschränkt sein kann.

An das Abstreifelement angrenzende außenliegende Bereiche eingefahrener Bauteile, insbesondere der Driftbereich, werden beim Lackieren mithilfe eines vorgeschalteten Elements, beispielsweise eines Klebebands, Formteils oder O-Ringes,geschützt. Nach dem Lackiervorgang werden die Schutzvorrichtungen abgenommen.

Der Erfindung liegt die Aufgabe zugrunde, ein einem System gegeneinander beweglicher Bauteile an ein Abstreifelement angrenzende außenliegende Bereiche eines verfahrbaren Bauteils in vereinfachter Weise beim Transport und bei der Montage zu schützen, wobei insbesondere eine leichte Abnahme der Schutzvorrichtung sichergestellt sein soll.

Die Aufgabe wird durch ein Abstreifelement der eingangs genannten Art gelöst, das erfindungsgemäß dadurch gekennzeichnet ist, dass an der Schutzlippe mindestens eine Ablösehilfe zum Ablösen der Schutzlippe vom Abstreifelement vorgesehen ist.

Eine derartige Ablösehilfe kann beim. Ablösevorgang ergriffen und weggezogen werden und erleichtert somit eine Entfernung der Schutzlippe. Eine Ablösehilfe bietet sich beispielsweise an, einen Materialschluss oder eine Perforierung an einer Stelle zu durchbrechen und anschließend durch Ziehen an der Ablösehilfe die komplette Anbindung der Schutzlippe zu lösen.

Die Schutzlippe ist lösbar am Abstreifelement vorgesehen, woraus sich der Vorteil ergibt, dass die Schutzlippe nach Gebrauch, d.h. nach Transport oder nach Lackierung der gegeneinander beweglichen Bauteile, vom Abstreifelement gelöst und entfernt werden kann. Eine Entfernung der Schutztippe erfordert gegenüber herkömmlichen Schutzvorrichtungen einen geringen Arbeitsaufwand.

In einer bevorzugten Ausgestaltung des erfindungsgemäßen Abstreifelements ist die mindestens eine Ablösehilfe als Griff oder als Lasche ausgebildet. Ein an der Schutzlippe vorgesehener Griff oder eine Lasche dient einer einfacheren Handhabung beim Ablösen der Schutzlippe vom Abstreifetement.

Die am Abstreifelement vorgesehene Schutzlippe ist einer Abstreiflippe vorgeschaltet und liegt ebenso wie die Abstreiflippe an dem zu schützenden Bauteil an, so dass die Schutzlippe den zwischen der Anlagelinie der Schutzlippe und der Anlagelinie der Abstreiflippe liegenden Bereich des Bauteils bedeckt und besagter Bereich vor Einflüssen aus der Umgebung wie Korrosiv- oder Lackpartikein geschützt ist.

Die Schutzlippe vereinfacht Transport, Montage und Inbetriebnahme eines Systems gegeneinander beweglicher Bauteile. Die Schutzlippe kann bereits beim . Transport am Abstreifelement befestigt sein, wodurch sich der Einsatz zusätzlicher Konservierungsmittel erübrigt. Das Abstreifelement wird zusammen mit der Schutzlippe vor einer Lackierung an einem Bauteil angebracht

In bevorzugter Ausführung des erfindungsgemäßen Abstreifelements ist die Schutzlippe aus einem gummi- oder zähelastischen Material, vorzugsweise dem gleichen Material wie das Abstreifelement, weicher oder härter als das Material des Abstreifelements, hergestellt.

Gummi- und zähelastischen Materialien sowie Komposite aus beiden Materialarten sind geeignet zur Herstellung von Abstreifelementen sowie zur Bereitstellung funktionstüchtiger Abstreiflippen. Eine aus einem solchen Material hergestellte Schutzlippe weist die gleichen Eigenschaften wie eine entsprechend hergestellte Abstreiflippe auf, insbesondere liegt sie dicht an einem Bauteil an. Ein Abstreifelement, dessen Schutz- und Abstreiflippe aus dem gleichen Material hergestellt sind, ist aufgrund einheitlicher Elastizität und Flexibilität gut handhabbar und liegt mit beiden Lippen in gleicher Weise an einem Bauteil an. Eine Schutzlippe, die aus einem weicheren Material als das Material des Abstreifetements hergestellt ist, hat ein vorteilhaftes Dichtungsverhalten gegenüber niederviskosen Flüssigkeiten und gegenüber Kleinstpartikein. Eine Herstellung der Schutzlippe aus einem Material, welches härter als das Material des Abstreifelements ist, bietet den Vorteil, dass sich eine derartige Schutzlippe als festeres Verbundstück leicht vom Abstreifelement lösen lässt.

In bevorzugter Ausgestaltung des erfindungsgemäßen Abstreifelements ist die Schutzlippe über einen Materialschluss am Abstreifelement befestigt ist, wobei der Materialschluss durchgehend oder segmentweise, vorzugsweise als Perforierung, ausgeführt ist.

Der Vorteil dieser Ausgestaltung liegt darin, dass die Schutzlippe und das Abstreifelement durch den Materiatschluss zwischen ihnen eine Einheit bilden, die im gleichen Herstellungsvorgang gefertigt und zudem in einem einzigen Schritt montiert werden kann. Ein Durchdringen von Lackpartikeln oder sonstigen Fremdstoffen an der Befestigungskante zwischen Schutzlippe und Abstreifelement ist bei einem durchgehenden Materialschluss ausgeschlossen, wodurch die Schutzlippe ihre Funktion in idealer Weise erfüllt. Demgegenüber ist eine segmentweise Anbindung der Schutzlippe vorteilhaft für eine Ablösung der Schutzlippe vom Abstreifelement. Eine Perforierung vereint die Vorteile der beiden Ausführungsarten, da ein als Perforierung ausgeführter Materialschluss an vergleichsweise kleinen Teilbereichen durchlässig für Partikel ist und durch eine nur in Teilstücken vorhandene Verbindung von Schutztippe und Abstreifelement eine leichte Lösung der beiden Formteile voneinander garantiert.

In weiterer Ausgestaltung des erfindungsgemäßen Abstreifelements sind am Abstreifelement und/oder an der Schutzlippe Mittel zur Anbindung der Schutzlippe vorgesehen, wobei eine Anbindung der Schutzlippe über einen Formschluss erfolgt.

Bei dieser Ausführungsart liegen Abstreifelement und Schutzlippe als getrennt gefertigte Formteile vor. Eine Anbindung der Schutzlippe am Abstreifelement erfolgt über einen Formschluss entsprechender Mittel, die an dem Abstreifelement, der Schutzlippe oder an beiden Formteilen vorgesehen sind. Der durch ein Verbinden entsprechender Anbindungsmittel entstehende Formschlüss verhindert, ähnlich wie ein Materiatschtuss, das Durchdringen von Partikeln durch die Verbindungsnaht. Eine über einen Formschluss angebundene Schutzlippe ist leicht vom Abstreifetement zu lösen. Die Anbindungsmittel werden durch ein Verbinden und durch ein anschließendes Lösen in der Regel nicht beschädigt. Daraus ergibt sich der Vorteil, dass die Schutzlippe bei Bedarf ausgetauscht werden kann, beispielsweise bei einer durch Transport stark beschmutzten oder beschädigten Schutzlippe, die zum Schutz während eines Lackierungsvorgangs weiterbenutzt werden soll. Ferner kann eine formschlüssig an- und abzubringende Schutzlippe mehrmals verwendet werden.

Weiter weist die Schutzlippe bevorzugt einen oder mehrere Vorsprünge und das Abstreifelement der Form der Vorsprünge entsprechende Aussparungen auf.

Die Anbindung der Schutzlippe erfolgt in dieser Ausführungsart durch ein In- oder Aneinanderklipsen oder Verrasten von an Abstreifelement und/oder Schutzlippe ausgebildeten Vorsprüngen und Aussparungen. Zum Erreichen einer festen Anbindung der Schutzlippe sind die Aussparungen beispielsweise derart geformt, dass sie jeweils durch einen entsprechenden Vorsprung hintergriffen werden und somit je eine Schwalbenschwanzverbindung schaffen. Bei einer Anordnung der Vorsprünge und Aussparungen in regelmäßigen Abständen entlang der Kante des Abstreifelements bzw. entlang der Schutzlippe wird eine reißverschlussähnliche Verbindungsnaht zwischen Schutzlippe und Abstreifelement gebildet.

In bevorzugter Ausgestaltung des erfiridungsgemäßen Abstreifelements überlappt die Schutzlippe im befestigten Zustand zumindest teilweise das Abstreifelement.

Die durch die Schutzlippe überlappten Teilbereiche des Abstreifelements sind ebenso wie der geschützte Bereich der Kolbenstange vor Korrosivpartikeln beim Transport und Lackpartikeln während eines Lackiervorgangs geschützt. Die Anbindung einer überlappenden Schutzlippe erfolgt vorzugsweise an einer Innenlinie der Schutzlippe.

Die Erfindung umfasst weiter eine Abstreiferanordnung mit einem erfindungsgemäßen Abstreifelement und zumindest zwei gegeneinander beweglichen Bauteilen, wobei das Abstreifelement positionsstabil an einem ersten Bauteil angeordnet ist und an einem zweiten Bauteil anliegt.

Das Abstreifelement ist in der erfindungsgemäßen Abstreiferanordnung entlang des durch zwei gegeneinander bewegliche Bauteile gebildeten Dichtspalts angeordnet. Die Bauteile können Teile einer Maschine oder eines Getriebes sein. Das Abstreifelement ist am ersten Bauteil, beispielsweise in einer Nut, gehalten. Die Abstreiflippe und die Schutztippe liegen am zweiten Bauteil an, so dass der zwischen den Anlagelinien beider Lippen liegende Bereich des zweiten Bauteils durch die Schutzlippe bedeckt und vor Umwelteinflüssen weitgehend geschützt ist. Für eine derartige Abstreiferanordnung ist ein Abstreifelement mit einer überlappenden Schutzlippe vorteilhaft, da eine überlappende Schutzlippe an beiden Bauteilen anliegen und auf diese Weise den gesamten Dichtspalt abdecken kann.

In einer bevorzugten Ausführung der erfindungsgemäßen Abstreiferanordnung liegt das Abstreifelement ringförmig am zweiten Bauteil an.

Das in dieser Abstreiferanordnung verwendete Abstreifelement ist ringförmig geschlossen und stellt einen sogenannten Abstreifring dar, der das zweite Bauteil umgreift und an dessen gesamtem Umfang anliegt. Daraus ergibt sich der Vorteil, dass auch die Schutzlippe zu einem Ring geschlossen ist und einen ringförmigen Bereich des zweiten Bauteils schützt.

Weiter ist das erste Bauteil bevorzugt ein Gehäuse und das zweite Bauteil eine Kolbenstange eines im Gehäuse geführten Kolbens.

Die Kolbenstange eines im Gehäuse geführten Kolbens ist beim Ein- und Ausfahren den Umgebungsbedingungen ausgesetzt. Zur Verhinderung des Eintritts von Fremdstoffen ins Gehäuseinnere ist am Gehäuse ein Abstreifelement derart angeordnet, dass die Abstreiflippe an der Kolbenstange anliegt. Das Abstreifelement ist beispielsweise in die Ringnut eines Zylinders eingelegt. Die Schutzlippe schützt den außenliegenden an das Abstreifelement anliegenden Bereich der eingefahrenen Kolbenstange sowohl beim Transport als auch beim Lackiervorgang.

In einer weiteren Ausführung weist die Kolbenstange im Querschnitt gesehen eine Vieleckform, insbesondere eine runde oder ovale Form, auf.

Das Abstreifelement liegt in der Regel am gesamten Umfang der Kolbenstange an. Die Vieleckform des Querschnitts einer Kolbenstange kann durch Zähne oder Keile an der Außenfläche der Kolbenstange bestimmt sein. Das Abstreifelement und infolgedessen auch die Schutzlippe folgen der Kontur der Vieleckform. Auf diese Weise erfüllen Schutzlippe und Abstreiflippe ihre Funktionen in vollem Maße. Ein runder oder ovaler Querschnitt der Kolbenstange ist vorteilhaft hinsichtlich eines Anordnens des Abstreifelements sowie eines An- und Abbringens der Schutzlippe.

In einer bevorzugten Ausführung der erfindungsgemäßen Abstreiferanordnung ist das Abstreifelement ein Einzel- oder Doppelabstreifer.

In Gehäuse-Kolben-Einheiten, die oftmals ein hydraulisches System darstellen, werden Abstreifelemente zur Säuberung der einzufahrenden Kolbenstange eingesetzt. Einzelabstreifer weisen eine Abstreiflippe auf, die zum Gehäuseäußeren ausgerichtet angeordnet wird. Die Schutzlippe ist der Abstreiflippe vorgeschaltet. Abstreifelemente können eine weitere Abstreiflippe aufweisen, die den Austritt von Öl aus dem hydraulischen System verhindert. Sogenannte Doppelabstreifer erfüllen eine doppelte Abdichtungsfunktion, Druckflüssigkeit nach innen abzudichten und Fremdstoffe von außen abzuhalten. Bei Doppelabstreifem ist die Schutzlippe vor der äußeren Abstreiflippe angebracht.

In einer weiteren bevorzugten Ausgestaltung der erfindungsgemäßen Abstreiferanordnung liegt die Schutzlippe im befestigten Zustand fluiddicht an der Kolbenstange und/oder am Gehäuse an.

Ein fluiddichtes Anliegen der Schutzlippe garantiert, dass keinerlei Flüssigkeiten wie beispielsweise Niederschläge während des Transports oder Farbstoffe beim Lackieren durch die Schutzlippe in den zu schützenden Bereich dringen. Eine überlappende Schutzlippe liegt sowohl am Gehäuse als auch an der Kolbenstange an, so dass der um die Kolbenstange liegende Dichtspalt von der Schutzlippe vollständig überdeckt wird und sowohl ein unter der Schutzlippe liegender Bereich der Kolbenstange als auch das im Dichtspalt angeordnete Abstreifelement in idealer Weise geschützt sind.

Die Erfindung umfasst weiterhin die Verwendung einer Abstreiferanordnung umfassend ein Abstreifelement aus einem gummi- oder zähelastischen Material, wobei an dem Abstreifelement zumindest eine Abstreiflippe vorgesehen ist, und wobei das Abstreifelement eine Schutzlippe aufweist, die lösbar am Abstreifelement vorgesehen ist, und zumindest zwei gegeneinander bewegliche Bauteile, wobei das Abstreifelement positionsstabil an einem ersten Bauteil angeordnet ist und an einem zweiten Bauteil anliegt, zur Lackierung gegeneinander beweglicher Bauteile. Dabei wird in einem ersten Schritt das Abstreifelement angeordnet und gegebenenfalls die Schutzlippe am Abstreifelement befestigt, in einem zweiten Schritt wird zumindest eines der gegeneinander beweglichen Bauteile lackiert und in einem dritten Schritt wird die Schutzlippe nach dem Lackiervorgang vom Abstreifelement gelöst.

In der erfindungsgemäßen Verwendung einer Abstreiferanordnung wird durch die am angeordneten Abstreifelement befestigte Schutzlippe der durch sie bedeckte Bereich eines Bauteils während des Lackierungsvorgangs vor einer Kontamination mit Lackpartikeln geschützt. Es versteht sich, dass in der Regel ein anderes Bauteil als das, an dem die Schutzlippe anliegt, lackiert wird. Nach dem Lackieren wird die Schutzlippe gelöst und entfernt. Durch die erfindungsgemäße Verwendung einer Abstreiferanordnung zur Lackierung kann ein System gegeneinander beweglicher Bauteile ohne durch den Lackiervorgang bedingte Vorschäden, insbesondere ohne Verschmutzungen, in Betrieb genommen werden.

Weitere Vorteile der Erfindung ergeben sich aus der Beschreibung und den Figuren der Zeichnung. Das erfindungsgemäße Abstreifelement und dies erfindungsgemäße Abstreiferanordnung sind in Ausführungsbeispielen in den Figuren dargestellt. Die in den Figuren gezeigten Ausführungsformen sind stark schematisiert dargestellt und nicht maßstäblich zu verstehen. Mit den einzelnen Bezugszeichen werden in den unterschiedlichen Ausführungsarten die gleichen Merkmale bezeichnet.

Es zeigt:
- Fig. 1: einen Querschnitt einer nicht erfindungsgemäßen Ausführungsform des Abstreifelements ;
- Fig. 2: einen Querschnitt eines beispielhaften erfindungsgemäßen Abstreifelements; und
- Fig. 3: einen Schnitt durch eine beispielhafte Anordnung eines Abstreifelements in einer Gehäuse-Kolben-Einheit.

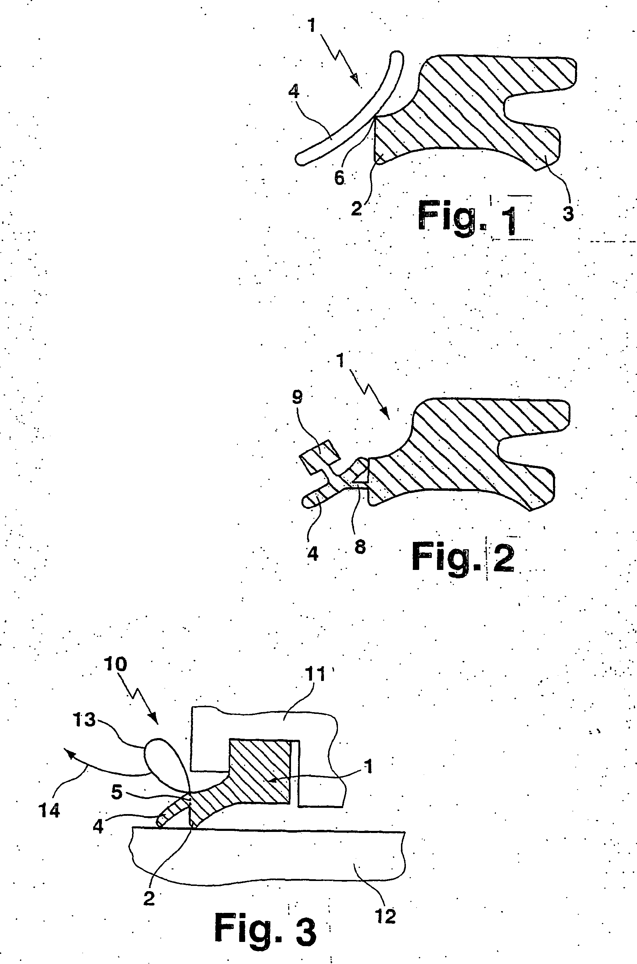

In Fig. 1 ist ein nicht erfindungsgemäßes Abstreifelement 1 mit einer Abstreiflippe 2 und einer weiteren Abstreiflippe 3 dargestellt. An der sockelförmigen Abschlusskante über der Abstreiflippe 2 ist eine Schutzlippe 4 angebunden. Die Schutzlippe 4 ist über einen schmalen linienförmigen Materialschluss, im Querschnitt mit dem Bezugszeichen 6 versehen, an dem Abstreifelement 1 befestigt. Die Schutzlippe 4 ist an einer Innenlinie angebunden, so dass sich die Schutzlippe 4 nicht nur nach unten bis zu einer Anlagefläche, sondern auch nach oben erstreckt und bandförmig das Abstreifelement 1 an der Vorderseite überlappt. Durch diese Überlappung sind nicht nur der durch die Schutzlippe 4 abgedeckte Bereich der Anlagefläche und die Abstreiflippe 2, sondern auch der obere Teil des Abstreifelements 1 verdeckt und zumindest teilweise vor Einflüssen aus der Umgebung, wie beispielsweise Lackpartikeln, geschützt. Die Schutzlippe 4 besteht aus einem gummielastischen Material, welches weicher als das Material des Abstreifelements 1 ist. Dadurch weist die Schutzlippe 4 ein gutes Dichtungsverhälten gegenüber leichtviskosen Fluiden und Kleinstpartikeln auf.

Fig. 2 zeigt ein als Doppelabstreifer ausgeführtes erfindungsgemäßes Abstreifelement 1 aus einem gummielastischen Material. An einer Stirnseite ist eine Schutzlippe 4 vorgesehen, die über einen Steg 8 am Abstreifelement 1 befestigt ist. Der Steg 8 verbindet die genannte Stirnseite mit der Mittellinie der Schutzlippe 4. Die Schutzlippe 4 liegt einenends an einer fiktiven Anlagefläche und anderenends an der oberen Kante der Stirnfläche des Abstreifelements 1 an. An der außenliegenden Seite der Schutzlippe 4 ist ein klotzförmiger Griff 9 angebracht, mithilfe dessen die Schutzlippe 4 über ein Abreißen des Steges 8 vom Abstreifelement 1 gelöst werden kann. Über derartige Stege ist die Schutzlippe 4 als Ganzes beispielsweise nur segmentweise am Abstreifelement 1 angebunden.

In Fig. 3 ist ein schematischer Schnitt durch eine erfindungsgemäße Abstreiferanordnung 10 dargestellt. In einem Gehäuse 11 ist ein Abstreifelement 1 in einer Ringnut eingelegt und liegt im Dichtspalt zwischen dem Gehäuse 11 und einer Kolbenstange 12 eines in dem Gehäuse 11 geführten Kolbens ringförmig an der Kolbenstange 12 an. Das Abstreifelement 1 weist als Einzeiabstreifer eine einzige Abstreiflippe 2 auf. Eine Schutzlippe 4 aus dem gleichen Material wie das Abstreifelement 1 ist an der Stirnfläche über der Abstreiflippe 2 am Abstreifelement 1 befestigt, wobei die Anbindung über eine Perforierung 5 erfolgt. An der Perforierkante ist eine Lasche 13 angebracht, mithilfe derer die Perforierung 5 zum Lösen der Schutzlippe 4 durchbrochen werden kann. Das Abstreifelement 1 liegt mit der Schutzlippe 4 und der Abstreiflippe 2 an der Kolbenstange 12 an, so dass der Bereich zwischen beiden Anlagenpunkten von der Schutzlippe 4 überdeckt wird. Die Überdeckung dient einer Konservierung des genannten Bereiches beim Transport der Abstreiferanordnung 10 als auch einem Schutz bei der Lackierung des Gehäuses 11. Durch ein fluiddichtes Anliegen der Schutzlippe 4 an der Kolbenstange 12 dringen keinerlei Korrosiv- oder Lackpartikel an den zu schützenden Bereich. Der außen an die Abstreiflippe 2 angrenzende Bereich der Kolbenstange 12 kann durch lackierbedingte Temperaturunterschiede unter die Abstreiflippe 2' gefahren werden, wodurch das Abstreifelement 1 und nachgeschaltete Dichtungen durch in diesem Bereich an der Kolbenstange 12 haftenden Schmutz- oder Lackpartikel verunreinigt werden. Als Folge dieser Kontamination können das Abstreifelement 1 sowie weitere Dichtungen und Bauteile der Gehäuse-Kolben-Einheit beschädigt und in ihrer Funktion beschränkt werden. Nach einer Lackierung des Gehäuses 11 wird die Schutzlippe 4 durch ein Ziehen an der Lasche 13 in Pfeilrichtung 14 vom Abstreifelement 1 gelöst und von der Kolbenstange 12 entfernt.

Die Erfindung betrifft ein Abstreifelement 1 nach Anspruch 1, aus einem gummi- oder zähelastischen Material zum Schutz gegeneinander beweglicher Bauteile, wobei an dem Abstreifelement 1 zumindest eine Abstreiflippe 2 vorgesehen ist. Das Abstreifelement 1 weist eine Schutzlippe 4 auf, die lösbar am Abstreifelement 1 befestigt oder befestigbar ist. In einer Abstreiferanordnung 10 ist das Abstreifelement 1 positionsstabil an einem ersten Bauteil angeordnet und liegt mit der Abstreiflippe 2 und der Schutzlippe 4 an einem zweiten Bauteil an. Bei Verwendung einer derartigen Abstreiferanordnung 10 zur Lackierung gegeneinander beweglicher Bauteile wird zumindest ein Bauteil im befestigten Zustand der Schutzlippe 4 lackiert und anschließend die Schutzlippe 4 vom Abstreifelement 1 gelost.

## Patentansprüche

1. Abstreifelement (1) aus einem gummi- oder zähelastischen Material zum Schutz gegeneinander beweglicher Bauteile, wobei an dem Abstreifelement (1) zumindest eine Abstreiflippe (2) vorgesehen ist, und wobei das Abstreifelement (1) eine Schutzlippe (4) aufweist, die lösbar am Abstreifelement (1) vorgesehen ist,
**dadurch gekennzeichnet, dass**
an der Schutzlippe (4) mindestens eine Ablösehilfe (9, 13) zum Ablösen der Schutzlippe (4) vom Abstreifelement (1) vorgesehen ist.

2. Abstreifelement (1) nach Anspruch 1, **dadurch gekennzeichnet, dass** die mindestens eine Ablösehilfe als Griff (9) oder als Lasche (13) ausgebildet ist.

3. Abstreifelement (1) nach Anspruch 1 oder 2,
**dadurch gekennzeichnet, dass**
die Schutzlippe (4) aus einem gummi- oder zähelastischen Material, vorzugsweise dem gleichen Material wie das Abstreifelement (1), weicher oder härter als das Material des Abstreifelements (1), hergestellt ist.

4. Abstreifelement (1) nach einem der Ansprüche 1 bis 3,
**dadurch gekennzeichnet, dass**
dass die Schutzlippe (4) über einen Materialschluss am Abstreifelement (1) befestigt ist, wobei der Materialschluss durchgehend oder segmentweise, vorzugsweise als Perforierung (5), ausgeführt ist.

5. Abstreifelement (1) nach einem der Ansprüche 1 bis 4,
**dadurch gekennzeichnet, dass**
dass am Abstreifelement (1) und/oder an der Schutzlippe (4) Mittel zur Anbindung der Schutzlippe (4) vorgesehen sind, wobei eine Anbindung der Schutzlippe (4) über einen Formschluss erfolgt.

6. Abstreifelement (1) nach Anspruch 5,
**dadurch gekennzeichnet, dass**
dass die Schutzlippe (4) einen oder mehrere Vorsprünge (7) und das Abstreifelement (1) der Form der Vorsprünge entsprechende Aussparungen aufweiset.

7. Abstreifelement (1) nach einem der Ansprüche 1 bis 6
**dadurch gekennzeichnet, dass**
die Schutzlippe (4) im befestigten Zustand das Abstreifelement (1) zumindest teilweise überlappt.

8. Abstreiferanordnung (10) umfassend
ein Abstreifelement (1) nach einem der Ansprüche 1 bis 7 und zumindest zwei gegeneinander bewegliche Bauteile,
wobei das Abstreifelement (1) positionsstabil an einem ersten Bauteil angeordnet ist und an einem zweiten Bauteil anliegt .

9. Abstreiferanordnung (10) nach Anspruch 8,
**dadurch gekennzeichnet, dass**
das Abstreifelement (1) ringförmig am zweiten Bauteil anliegt.

10. Abstreiferanordnung (10) nach Anspruch 8 oder 9,
wobei das erste Bauteil ein Gehäuse (11) und das zweite Bauteil eine Kolbenstange (12) eines im Gehäuse (11) geführten Kolbens ist.

11. Abstreiferanordnung (10) nach Anspruch 10
**dadurch gekennzeichnet, dass**
die Kolbenstange (12) im Querschnitt gesehen eine Vieleckform, insbesondere eine runde oder ovale Form, aufweist.

12. Abstreiferanordnung (10) nach Anspruch 10 oder 11
**dadurch gekennzeichnet, dass**
das Abstreifelement (1) ein Einzel- oder Doppelabstreifer ist.

13. Abstreiferanordnung (10) nach einem der Ansprüche 10 bis 12
**dadurch gekennzeichnet, dass**
die Schutzlippe (4) im befestigten Zustand fluiddicht an der Kolbenstange (12) und/oder am Gehäuse (11) anliegt.

14. Verwendung einer Abstreiferanordnung (10) umfassend ein Abstreifelement (1) aus einem gummi- oder zähelastischen Material, wobei an dem Abstreifelement (1) zumindest eine Abstreiflippe (2) vorgesehen ist, und
wobei das Abstreifelement (1) eine Schutzlippe (4) aufweist, die lösbar am Abstreifelement (1) vorgesehen ist, und zumindest zwei gegeneinander bewegliche Bauteile, wobei das Abstreifelement (1) positionsstabil an einem ersten Bauteil angeordnet ist und an einem zweiten Bauteil anliegt, insbesondere nach einem der Ansprüche 8 bis 13, zur Lackierung gegeneinander beweglicher Bauteile,
die folgenden Schritte umfassend:
1. Anordnung des Abstreifelements (1) und gegebenenfalls Befestigung der Schutzlippe (4) am Abstreifelement (1);
2. Lackierung zumindest eines der gegeneinander beweglichen Bauteile ; und
3. Lösung der Schutzlippe (4) vom Abstreifelement (1) nach dem Lackiervorgang.

## Claims

1. A wiping element (1) made of a rubbery-elastic or viscoelastic material for the protection of components movable against one another, wherein at least one wiping lip (2) is provided on the wiping element (1), and wherein the wiping element (1) has a protective lip (4), which is provided on the wiping element (1) in a detachable fashion,
**characterized in that**
at least one detachment aid (9,13) for detaching the protective lip (4) from the wiping element (1) is provided on the protective lip (4).

2. The wiping element (1) according to claim 1,
**characterized in that**
the at least one detachment aid is configured as a grip (9) or as a strap (13).

3. The wiping element (1) according to claim 1 or 2,
**characterized in that**
the protective lip (4) is produced from a rubbery-elastic or viscoelastic material, preferably from the same material as the wiping element (1), softer or harder than the material of the wiping element (1).

4. The wiping element (1) according to any one of claims 1 to 3,
**characterized in that**
the protective lip (4) is fixed by means of a form-fit to the wiping element (1), the form-fit being embodied continuously or segment-wise, preferably as a perforation (5).

5. The wiping element (1) according to any one of claims 1 to 4,
**characterized in that**
means for the attachment of the protective lip (4) are provided on the wiping element (1) and/or on the protective lip (4), the attachment of the protective lip (4) being made by means of positive locking fit.

6. The wiping element (1) according to claim 5,
**characterized in that**
the protective lip (4) has one or more projections (7) and the wiping element (1) has recesses corresponding to the shape of the projections.

7. The wiping element (1) according to any one of claims 1 to 6,
**characterized in that**
the protective lip (4) in the fixed state at least partially overlaps the wiping element (1).

8. A wiper arrangement (10) comprising
a wiping element (1) according to any one of claims 1 to 7
and at least two components movable against one another, wherein the wiping element (1) is arranged in a stable position on a first component and abuts to a second component.

9. The wiper arrangement (10) according to claim 8,
**characterized in that**
the wiping element (1) abuts to the second component in an annular fashion.

10. The wiper arrangement (10) according to claim 8 or 9,
wherein the first component is a housing (11) and the second component is a piston rod (12) of a piston guided in the housing (11).

11. The wiper arrangement (10) according to claim 10,
**characterized in that**
the piston rod (12), when viewed in cross-section, has a polygonal shape, in particular a round or oval shape.

12. The wiper arrangement (10) according to claim 10 or 11,
**characterized in that**
the wiping element (1) is a single wiper or a double wiper.

13. The wiper arrangement (10) according to any one of claims 10 to 12,
**characterized in that**
the protective lip (4) in the fixed state abuts fluid-tight to the piston rod (12) and/or the housing (11).

14. Use of a wiper arrangement (10), comprising
a wiper element (1) made of a rubbery-elastic or viscoelastic material, wherein at least one wiping lip (2) is provided on the wiping element (1), and wherein the wiping element (1) has a protective lip (4), which is provided on the wiping element (1) in a detachable fashion, and at least two components which are movable against one another, wherein the wiping element (1) is arranged in a stable position on a first component and abuts to a second component, in particular according to any one of claims 8 to 13, for the lacquering of components movable against one another,
comprising the following steps:
1. arranging the wiping element (1) and, as necessary, fixing the protective lip (4) on the wiping element (1);
2. lacquering of at least one of the components movable against one another; and
3. detachment of the protective lip (4) from the wiping element (1) after the lacquering process.

## Revendications

1. Elément racleur (1) en un matériau du type caoutchouc ou un matériau élastique dur, pour la protection de pièces mobiles les unes contre les autres, au moins une lèvre de raclage (2) étant prévue sur l'élément racleur (1) et l'élément racleur (1) présentant une lèvre de protection (4) qui est prévue amovible ou détachable sur l'élément racleur (1),
**caractérisé en ce que** sur la lèvre de protection (4) est prévu au moins un élément d'aide au détachement (9, 13) pour détacher ou séparer la lèvre de protection (4) de l'élément racleur (1).

2. Elément racleur (1) selon la revendication 1,
**caractérisé en ce que** ledit au moins un élément d'aide au détachement est réalisé sous la forme d'une prise (9) ou d'une languette (13).

3. Elément racleur (1) selon la revendication 1 ou la revendication 2,
**caractérisé en ce que** la lèvre de protection (4) est fabriquée en un matériau du type caoutchouc ou un matériau élastique dur, de préférence en le même matériau que l'élément racleur (1), plus mou ou plus dur que le matériau de l'élément racleur (1).

4. Elément racleur (1) selon l'une des revendications 1 à 3,
**caractérisé en ce que** la lèvre de protection (4) est fixée par une liaison de continuité de matière à l'élément racleur (1), la liaison de continuité de matière étant réalisée de manière continue ou segmentée, de préférence sous forme de perforation (5).

5. Elément racleur (1) selon l'une des revendications 1 à 4,
**caractérisé en ce que** sur l'élément racleur (1) et/ou sur la lèvre de protection (4) sont prévus des moyens pour l'attachement de la lèvre de protection (4), un attachement de la lèvre de protection (4) s'effectuant par l'intermédiaire d'une liaison par complémentarité de formes.

6. Elément racleur (1) selon la revendication 5,
**caractérisé en ce que** la lèvre de protection (4) comporte une ou plusieurs protubérances (7) et l'élément racleur (1) des évidements correspondant à la forme des protubérances.

7. Elément racleur (1) selon l'une des revendications 1 à 6,
**caractérisé en ce que** dans l'état fixé, la lèvre de protection (4) recouvre au moins partiellement l'élément racleur (1).

8. Agencement de racleur (10) comprenant un élément racleur (1) selon l'une des revendications 1 à 7 et au moins deux pièces mobiles l'une contre l'autre,
l'élément racleur (1) étant agencé en position stable sur une première pièce et s'appuyant sur une deuxième pièce.

9. Agencement de racleur (10) selon la revendication 8,
**caractérisé en ce que** l'élément racleur (1) s'appuie selon une forme annulaire sur la deuxième pièce.

10. Agencement de racleur (10) selon la revendication 8 ou la revendication 9,
dans lequel la première pièce est un carter (11) et la deuxième pièce une tige de piston (12) d'un piston guidé dans le carter (11).

11. Agencement de racleur (10) selon la revendication 10,
**caractérisé en ce que** la tige de piston (12) présente, vue en section transversale, une forme polygonale, en particulier une forme ronde ou ovale.

12. Agencement de racleur (10) selon la revendication 10 ou la revendication 11,
**caractérisé en ce que** l'élément racleur (1) est un racleur simple ou un racleur double.

13. Agencement de racleur (10) selon l'une des revendications 10 à 12,
**caractérisé en ce que** dans l'état fixé, la lèvre de protection (4) s'appuie de manière étanche aux fluides contre la tige de piston (12) et/ou le carter (11).

14. Utilisation d'un agencement de racleur (10) comprenant
un élément racleur (1) en un matériau du type caoutchouc ou un matériau élastique dur, au moins une lèvre de raclage (2) étant prévue sur l'élément racleur (1) et l'élément racleur (1) présentant une lèvre de protection (4) qui est prévue amovible ou détachable sur l'élément racleur (1),
et au moins deux pièces mobiles l'une contre l'autre, l'élément racleur (1) étant agencé en position stable sur une première pièce et s'appuyant sur une deuxième pièce,
notamment selon l'une des revendications 8 à 13,
en vue de la peinture ou du vernissage de pièces mobiles les unes contre les autres,
cette utilisation se déroulant selon les étapes suivantes :
1. mise en place de l'élément racleur (1) et, le cas échéant, fixation de la lèvre de protection (4) sur l'élément racleur (1) ;
2. peinture ou vernissage d'au moins l'une des pièces mobiles les unes contre les autres ; et
3. détachement de la lèvre de protection (4) de l'élément racleur (1) après l'opération de peinture ou de vernissage.
